# EUROPÄISCHE PATENTANMELDUNG

(11) **EP 0 743 268 A2**
(43) Veröffentlichungstag der Anmeldung: **20.11.1996**
(21) Anmeldenummer: 96107631.2
(22) Anmeldetag: 14.05.1996
(51) Int. Cl.: B65G 53/24, B65G 53/66

(54) **Verfahren und Vorrichtung zur Förderung von Schüttgut mittels einer Propfenförderung**

(30) Priorität: 17.05.1995 DE 19518013; 17.05.1995 DE 19518012
(71) Anmelder: FILTERWERK MANN & HUMMEL GmbH, D-71638 Ludwigsburg (DE)
(72) Erfinder: Ritter, Valentin, 70437 Stuttgart (DE); Jung, Manfred, 71679 Asperg (DE); Schwarz, Peter, 71732 Tamm (DE); Veyl, Lothar, 74376 Gemmrigheim (DE)
(74) Vertreter: Aldag, Wolfgang, Dipl.-Ing.

(57) **Zusammenfassung**

Die Erfindung betrifft ein Verfahren und eine Vorrichtung zur Förderung von Schüttgut, insbesondere eines granulat- oder pulverförmigen Materials, das kontinuierlich in einer Kunststoff-Aufbereitungsanlage anfällt. Das Schüttgut (2) wird von einem Aufgabebehälter (1) zu einem Empfangsbehälter (7) über eine rohrförmige Förderleitung (3) mittels eines Luftstroms transportiert. Hierbei werden Mittel zur Mengensteuerung des Schüttguts (2) eingesetzt, wobei der Luftstrom mittels einer Ansaugvorrichtung (6,25) erzeugt wird. Der Luftstrom in der Förderleitung (3) wird derart gesteuert, daß ein Betriebszustand erreichbar ist, bei dem sich mindestens ein in Richtung (4) des Luftstroms bewegender Schüttgutpfropfen (12,13, 14,17) herausbildet. Es ist eine Steuerungsvorrichtung (30) zur Anpassung der Förderleistung und zur Durchführung weiterer Betriebsarten, z.B. eines Reinigungszyklusses, vorhanden.

## Beschreibung

Die Erfindung betrifft ein Verfahren und eine Vorrichtung zur Förderung von Schüttgut, insbesondere zur Pfropfenförderung von Schüttgut bei kontinuierlichem Materialanfall in einer Kunststoff-Aufbereitungsanlage, nach dem Oberbegriff des Hauptanspruchs.

### Stand der Technik

Es ist bereits aus der DE-OS 33 23 739 eine Vorrichtung zur Pfropfenförderung von granulat- oder pulverförmigen Material bekannt, bei der das Material, welches beispielsweise von einer Kunststoff-Stranggießmaschine abgegeben wird, durch eine Förderleitung mittels eines Luftstroms transportiert wird. Eine derartige Pfropfenförderung, die zu den Dichtstromförderverfahren gehört, verwendet man, um Schüttgut möglichst schonend mit geringer Geschwindigkeit und kleinem Förderdruck durch ein Rohr als Förderleitung zu transportieren. Besondere Bedeutung hat dieses Förderverfahren für sogenannte abrasive oder abriebempfindliche Materialien bzw. für Materialien die sich entmischen können. Weil hiermit größere Durchsätze mit kleineren Luftmengen erreicht werden können, bleiben die Energiekosten niedrig.

Bei der bekannten Vorrichtung saugt beispielsweise ein Gebläse über ein Rohrsystem Umgebungsluft mit einer durchschnittlichen Geschwindigkeit von 20 bis 30 m/s an. Wird dem Luftstrom am Anfang der Förderleitung das granulatförmige Material zugegeben, so wird dieses Material im Luftstrom mitgerissen und somit weiter befördert. Das zu fördernde Material hat in der Regel eine, trotz Kühlung nach dem Gießprozeß, relativ hohe innere Temperatur und ist damit noch relativ weich, so daß bei einer reinen Flugförderung durch Materialabrieb an der Rohrwand der Förderleitung haarförmige Restbestände (sog. Engelshaar) entstehen würde. Durch anfallenden Abrieb und die anschließende Verstopfung von Verarbeitungsmaschinen ist die Qualität des Materials vermindert.

Wenn am Anfang einer Förderleitung dem Schüttgut nur wenig Förderluft zugegeben wird, dann bildet es von allein Pfropfen, die jeweils durch Luftpolster voneinander getrennt sind. Es können sich jedoch beim Fördervorgang Pfropfen zusammenschieben, die schließlich eine derartige Länge erreichen, daß der Förderdruck zur Aufrechterhaltung des Schüttguttransports nicht mehr ausreicht. Bei bestimmten Schüttgütern können die Pfropfen hierbei so lang werden oder das Schüttgut hat einen so hohen Reibwiderstand, daß die Förderleitung verstopfen kann. Hinzu kommt, daß der Druck zum Schieben eines Pfropfens nicht nur von seiner Länge sondern auch von seiner Dichte abhängt. Besonders bei einem Schüttgut mit breitem Kornspektrum entstehen Pfropfen mit verschiedenen Dichten.

Bei dieser Förderungsart von Schüttgut muß somit immer gewährleistet sein, daß eine kleine Luftmenge (Primärluft) durch die Pfropfen strömt. Vor allem pulvrige Schüttgüter mit hohem Lufthaltvermögen, die fluidiesierbar sind, neigen sehr leicht zum Verstopfen, besonders, wenn die Anlage kurzzeitig steht und das Schüttgut sich in der Förderleitung entlüften kann. Beim Wiederanfahren einer Förderung so eines Schüttgutes ohne weitere Hilfsmittel sind große Druckkräfte erforderlich, die zu einem Blockieren der Anlage führen können.

Gemäß der eingangs genannten Offenlegungsschrift wird das Entstehen von blockierenden Schüttgutpfropfen dadurch verhindert, daß über eine separate Nebenleitung zur Förderleitung in vorgegebenen Abständen zusätzliche Förderluft zugegeben wird. Es sind hierzu in diesen Abständen differenzdruckgesteuerte Absperrventile in den Abzweigleitungen zwischen der Nebenleitung und der Förderleitung angeordnet, die jeweils über eine Fühlerleitung mit der nächsten stromab gelegenen Abzweigleitung verbunden sind.

### Aufgabenstellung

Der Erfindung liegt die Aufgabe zugrunde, ein Verfahren der eingangs genannten Art so fortzubilden, daß eine optimale, platzsparende und einfach zu steuernde Anordnung der Elemente der Kunststoff-Aufbereitungsanlagen unter Vermeidung von Qualitätseinbußen beim transportierten Material gewährleistet ist.

### Vorteile der Erfindung

Das erfindungsgemäße Verfahren der eingangs genannten Art mit den kennzeichnenden Merkmalen des Anspruchs 1 ist insbesondere dadurch vorteilhaft, daß durch eine geeignete Steuerung des Luftstroms hinter der Ansaugvorrichtung und in der Förderleitung das kontinuierlich anfallende Schüttgut schonend in den zweiten Behälter transportiert werden kann, wobei lediglich ein relativ kleiner Aufgabebehälter als erster Behälter Verwendung finden kann. Hierbei ist sichergestellt, daß die Förderleistung und die anfallende Schüttgutmenge optimal aufeinander abgestimmt sind und die Funktionstüchtigkeit der Anlage dauerhaft gewährleistet ist.

Das erfindungsgemäße Verfahren führt zu einer Ausbildung der Pfropfen, die sich vergleichbar einer Dünenwanderung auf dem Boden und den Wänden der Förderleitung fortbewegen. Bei dieser Fortbewegung wird etwas granulatförmiges Schüttgut am hinteren Ende des Pfropfens verloren und im Rohr der Förderleitung liegendes Schüttgut lagert sich in Richtung des Luftstroms am anderen Ende vorn wieder an. Mit der mindestens einen Bypassluftzuführung im Bereich des ersten Behälters und über eine Drossel wird die Luftmenge in vorteilhafter Weise so dimensioniert, daß eine vorgegebene Maximalluftmenge durch die Förderleitung hindurchtreten kann. Hierbei ergeben sich hinsichtlich der Pfropfenbildung bei konstanter Ansaugleistung unterschiedliche Betriebszustände. Bei keinem oder wenig Material in der Förderleitung wird, aufgrund der Begrenzung in der Bypassluftzuführung, mit dem dadurch einsetzenden Primärluftstrom Schüttgut aus dem ersten Behälter angesaugt und die Pfropfenbildung gefördert.

Bei einer erhöhten Schüttgutmenge, bzw. einer erhöhten Pfropfenzahl und damit entsprechend geringen Luftstrom in der Förderleitung, wird ausschließlich Sekundärluft angesaugt und der versiegende Primärluftstrom führt zu einer Verminderung der Schüttgutmenge und damit der Pfropfenzahl. Somit ist ein gleichmäßiger Materialfluß in der Förderleitung weitgehend sichergestellt. Die Förderleistung für das Schüttgut ist dabei von folgenden Faktoren abhängig. Einerseits vom mit der Ansaugvorrichtung erzeugten Unterdruck in der Förderleitung und andererseits von der Fördergeschwindigkeit der Pfropfen. Wird über die Bypassdrossel ein größerer Querschnitt geöffnet, so werden die Pfropfen kleiner, die Fördergeschwindigkeit jedoch größer, was zu einer erhöhten Förderleistung führt. Wird der Ansaugdruck erhöht, so erhöht sich auch die Förderleistung.

In vorteilhafter Weise kann mit geeigneten Steuermitteln nach den weiteren Unteransprüchen und insbesondere mit der Vorrichtung zur Ausführung des erfindungsgemäßen Verfahrens nach Anspruch 6 ein optimaler Transport des Schüttguts zur Zwischenlagerung im Empfangsbehälter vorgenommen werden und durch eine geeignete Wahl der Förderungsart auch eine Restentleerung zur Reinigung vorgenommen werden.

Die im nebengeordneten Anspruch 7 angegebene Vorrichtung ist insbesondere dadurch vorteilhaft, daß durch eine geeignete Steuerung des Luftstroms in der Förderleitung eine einfache und kostengünstige Beseitigung oder Verhinderung von Verstopfungen möglich ist und das Schüttgut somit schonend und entmischungsfrei in den zweiten Behälter transportiert werden kann.

Bei dieser letztgenannten erfimdungsgemäßen Vorrichtung führt ein geeignetes Gas-Luftverhältnis in der Förderleitung dazu, daß sich die oben beschriebenen Pfropfen selbst bilden und dabei entlang der Förderleitung in ihrer Länge ständig variieren. Die Vorrichtung kann für pulver- und granulatförmiges Schüttgut eingesetzt werden, wobei die in vorgegebenen Abständen angeordneten Ventile als Pfropfenspaltventile wirken können, da sie verstopfte Pfropfen entweder spalten können oder es wird der Pfropfen, der zu einer Blockade geführt hat, mit dem gesamten Ansaugdruck in den Empfangsbehälter gezogen. Liegt der Förderdruck der Förderleitung im Bereich eines Ventils über der vorab optimierten Ventileinstellung, so ist das Ventil, d.h. die Öffnung dieses Abschnitts der Förderleitung gegenüber der Außenluft, geschlossen. Liegt der Förderdruck in dem Abschnitt unter der Ventileinstellung, dann öffnet das Ventil und es wird zusätzlich Förderluft von der Außenluft angesaugt.

Die zusätzliche Förderluft führt hierbei zu einer Spaltung des verstopfenden Pfropfens in diesem Abschnitt. Bei einer geeigneten Einstellung des Öffnungsdrucks, der in Abhängigkeit vom Schüttgutmaterial empirisch ermittelbar ist, kann somit ein linearer Druckverlauf gemäß Anspruch 2 über die gesamte Länge der Förderleitung gewährleistet und dadurch ein Verstopfen der Förderleitung verhindert werden. Es können auch andere optimierte Drückverläufe hiermit realisiert werden.

Vorteilhafte Ausführungsformen dieser erfindungsgemäßen Vorrichtung sind in den weiteren Unteransprüchen angegeben.

### Zeichnung

Ausführungsbeispiele des erfindungsgemäßen Verfahrens und der Vorrichtungen zur Ausführung des Verfahrens werden anhand der Zeichnung erläutert. Es zeigen:
Figur 1 eine Prinzipskizze einer an sich bekannten Vorrichtung zum Transport von granulatförmigen Schüttgut;
Figur 2 eine Darstellung mit einer Bildung von 3 Pfropfen in einer Förderleitung;
Figur 3 eine Darstellung mit einer Bildung von 2 Pfropfen in einer Förderleitung;
Figur 4 eine Prinzipskizze einer Kunststoff-Granulatförderanlage mit der Zulieferung über eine Dosierrinne;
Figur 5 ein Luftdurchsatz-Druck-Diagramm einer Anlage nach Figur 4;
Figur 6 eine Prinzipskizze einer erfindungsgemäßen Förderleitung mit zusätzlichen Ventilen und mit einem dazugehörigen Diagramm eines Druckverlaufs über der Länge der Förderleitung und
Figur 7 eine Detaildarstellung eines solchen Ventils.

### Beschreibung der Ausführungsbeispiele

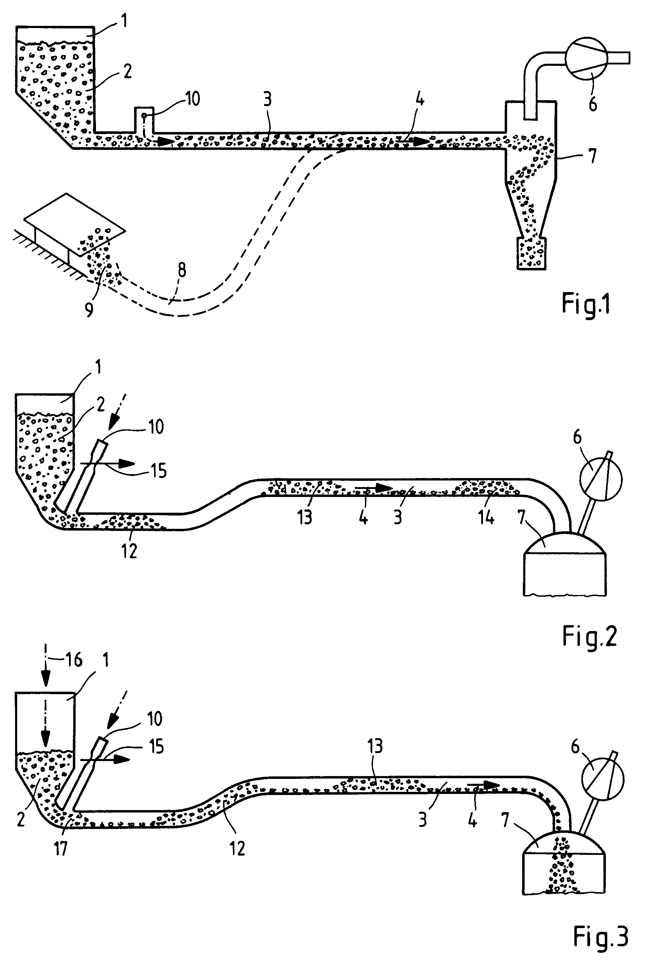

In Figur 1 ist ein Aufgabebehälter 1 als erster Behälter vorhanden, der ein kontinuierlich anfallendes, granulatförmiges Ausgangsmaterial (Schüttgut 2) einer hier nicht dargestellten Stranggießmaschine auffängt. Das Schüttgut 2 gelangt in eine Förderleitung 3, durch die ein Luftstrom gemäß Pfeil 5 von einem Gebläse 6 als Ansaugvorrichtung erzeugt wird. Das transportierte Schüttgut 2 fällt am Ende der Förderleitung 3 in einen Empfangsbehälter 7 als zweiten Behälter. Weiterhin ist hier eine Bypassluftzuführungen 10 vorhanden, über die eine sogenannte Sekundärluft ansaugbar ist. Als weitere Zugabeeinrichtung ist hier noch eine Dosierrinne 8 gezeigt, über die auf eine andere Art kontinuierlich anfallendes Schüttgut 9 in die Förderleitung 3 zugeführt werden kann. Diese Figur dient lediglich der Veranschaulichung des Prinzips eines Transportverfahrens für granulatförmiges Schüttgut und sagt nichts über die Materialbewegung aus.

In Figur 2 ist ein Zustandsbild von Pfropfen 12, 13 und 14 gezeigt, die sich in der Förderleitung 3 gebildet haben. Bei diesem Zustandsbild wird eine relativ geringe Luftmenge von dem Gebläse 6 angesaugt, wobei ein Teil des Luftstromes durch das Schüttgut aller drei Pfropfen 12 bis 14 gelangen muß und ein anderer Teil den Pfropfen ziehen bzw. schieben muß. Diese geringere Luftmenge kann durch eine geeignete Bemessung einer Drossel 15 in vollem Umfang als Sekundärluft durch die Bypassluftzuführung 10 angesaugt werden.

Der Pfropfen 14 steht beim Zustandsbild nach Figur 2 kurz vor dem Absinken in den Empfangsbehälter 7; beim Zustandsbild nach Figur 3 ist der Pfropfen 14 gerade in den Empfangsbehälter 7 hineingefallen, so daß hier nur noch zwei Pfropfen 12 und 13 in der Förderleitung 3 vorhanden sind. Durch die zwei Pfropfen 12 und 13 kann das Gebläse 6 (bzw. eine Vakuumpumpe) mehr Luft ansaugen als durch drei Pfropfen, so daß eine Luftmenge angesaugt wird, die nicht mehr allein durch die Bypassluftzuführung 10 gelangen kann. Die zusätzliche Luftmenge kann somit als Primärluft 16 durch das Schüttgut 2 im Behälter 1 angesaugt werden, wobei sie wiederum Schüttgut 2 mitreißt und einen neuen Pfropfen 17 bildet. Diese anhand der Figuren 2 und 3 beschriebenen Zustandsbilder beschreiben einen kontinuierlichen Prozeß, bei dem sich die Zustandsbilder ständig wiederholen, solange die Ansaugvorrichtung 6 in Betrieb ist und sich ausreichend Schüttgut 2 im Aufgabebehälter 1 befindet.

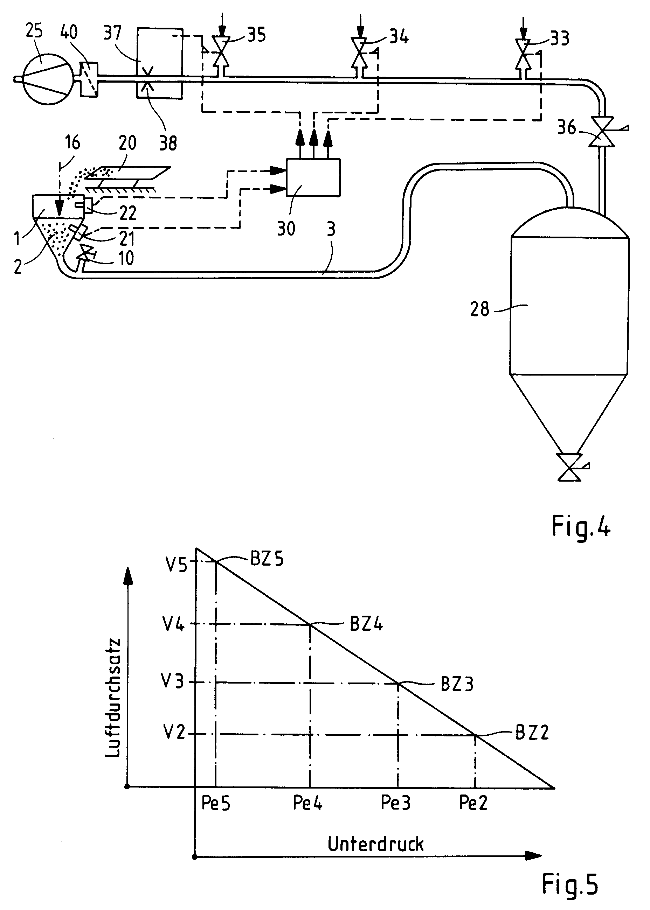

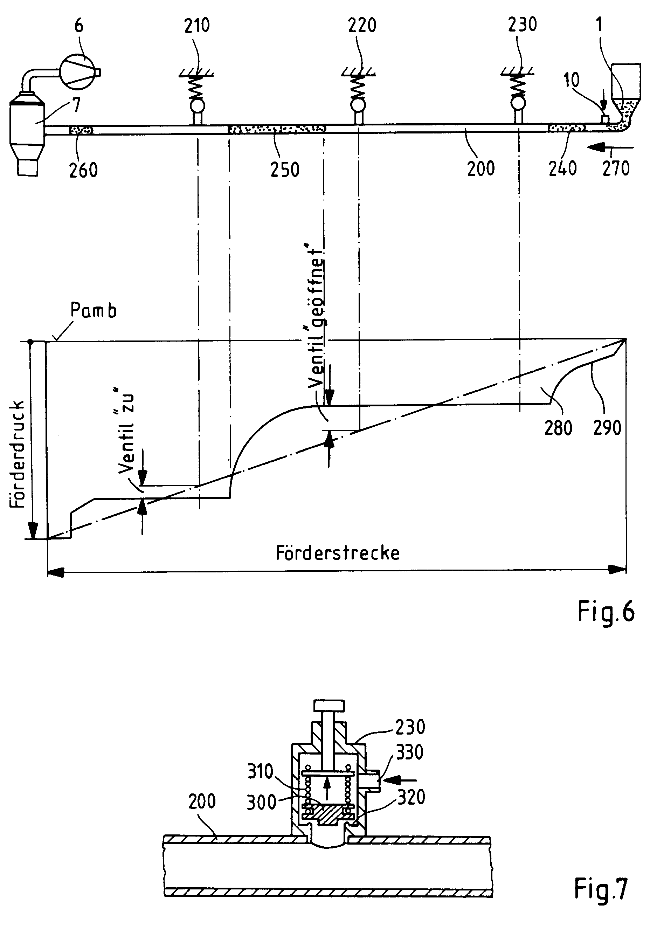

Aus Figur 4 ist als bevorzugtes Ausführungsbeispiel eine anwendungsorientierte Anlage zum Transport von Kunststoffgranulat ersichtlich, wobei das Luftdurchsatz-Druck-Diagramm nach Figur 5 zur Verdeutlichung hinzugezogen wird. Der Aufgabebehälter 1 wird hier über eine Dosierrinne 20 beschickt; zur genauen Bestimmung des Füllstands sind im Aufgabebehälter 1 als Detektionsmittel ein Minimum-Melder 21 und ein Maximum-Melder 22 vorhanden.

Entsprechend dem Füllstand im Aufgabebehälter 1 wird über eine Steuervorrichung 30 die Förderleistung so angepaßt, daß die Propfenförderung in der Förderleitung 3 nicht abreißt. Nach Beendigung der Förderung wird über die Änderung der Fördergeschwindigkeit mittels einer weiteren Steuerungsvorrichtung 37 (mit Meßblende 38) eine schonende Restentleerung des Aufgabebehälters 1 ermöglicht. Über die Steuerung 30 wird nach Förderende ein Reinigungszyklus mit relativ hoher Luftgeschwindigkeit initiiert.

Unter der Annahme, daß somit immer eine ausreichende Schüttgutmenge im Behälter 1 vorhanden ist, kann von der Ansaugvorrichtung mit einer Vakuumpumpe 25 der Transportvorgang des Schüttguts 2 in den Empfangsbehälter 28 gestartet werden. Auf den Funktionsablauf während der Flugförderung wird hier nur insoweit eingegangen, wie diese als zusätzliche Arbeits- bzw. Reinigungsprozedur angewendet wird.

Bei einem Anlaufen der Vakuumpumpe 25 ist zunächst eine Leerfahrklappe 33 geöffnet, so daß kein Luftstrom in der Förderleitung 3 entstehen kann. Nach einem Schließen der Leerfahrklappe 33, eines Förderdrucksenkungsventils 34 und eines Geschwindigkeitsregulierventils 35 sowie einer Öffnung von einer dem Empfangsbehälter 28 zugeordneten Förderklappe 36 kann die Förderung von Schüttgut 2 beginnen. Die Steuerung dieser Ventile und Klappen erfolgt über die Steuerungsvorrichtungen 30 und/oder 37. Dieser vorhergehend beschriebene Betriebszustand entspricht dem im Diagramm nach Figur 5 als BZ2 angegebenen Bereich.

Um eine Verlangsamung der Pfropfenförderung zu erreichen, beispielsweise damit der Aufgabebehälter 1 nicht leerläuft, kann hier nun zusätzlich das Förderdrucksenkungsventil 34 geöffnet werden. Dieser Betriebszustand mit relativ geringer Fördermenge ist im Diagramm nach Figur 5 als BZ3 bezeichnet.

In der Endphase der Funktion der Anlage nach Figur 4 können, wenn die Dosierrinne 20 kein Material mehr zuführt und der Behälter 1 nahezu leer ist, die Ventile 33 und 34 geschlossen werden. Über das Geschwindigkeitsregulierventil 35 kann der Luftstrom, auch bei Abriß der Pfropfenförderung, so gesteuert werden, daß dieser eine Fördergeschwindigkeit von 20 bis 22 m/s nicht überschreitet. Dieser Betriebszustand BZ4 kann über ein Zeitglied derart gesteuert werden, daß eine schonende Restleersaugung der Förderleitung 3 gewährleistet ist. Durch ein Schließen der Ventile und Klappen 33, 34 und 35 kann bei geöffneter Förderklappe 36 jedoch noch ein zusätzlicher Reinigungsgang, der im Diagramm nach Figur 5 als BZ5 bezeichnet ist, mit relativ schneller Flugförderung des Schüttguts 2 durchgeführt werden.

Der Ansaugvorrichtung 25 ist darüber hinaus zusätzlich eine Filteranordnung 40 vorgeschaltet, mit der eine Ausfilterung von im Luftstrom zum Empfangsbehälter 28 noch mitgeführten Staubpartikeln des Schüttguts 2 durchführbar ist.

Aus Figur 6 ist eine Förderleitung 200 ersichtlich, die in regelmäßigen Abständen mit Ventilen 210, 220 und 230 als Pfropfenspaltventile versehen ist. Die grundsätzliche Funktionsweise entspricht der anhand der Figuren 2 und 3 beschriebenen Pfropfenbildung, wobei gleichwirkende Bauteile mit identischen Bezugszeichen versehen sind. Die Fortbewegung von Pfropfen 240, 250 und 260 soll hier in Richtung des Pfeiles 270 erfolgen.

Beim unten in der Figur 6 dargestellten Diagramm ist in der Vertikalen der von der Ansaugvorrichtung (Gebläse 6) erzeugte Förderdruck über der Länge L der Förderleitung 200 gezeigt. Die Linie 280 soll den idealen Verlauf des Drucks in der Förderleitung 200 darstellen, der hier linear in Richtung des Aufgabebehälters 1 absinken soll um einen kontinuierlichen Förderprozeß zu gewährleisten. Der tatsächliche Verlauf des Drucks in der Förderleitung ist in der Kurve 290 dargestellt. Hieraus ist ersichtlich, daß im Bereich der Pfropfen 240, 250 und 260 an der der Ansaugvorrichtung (Gebläse 6) zugewandten Seite ein plötzlicher Druckabfall, bedingt durch die Behinderung durch das Schüttgut in den Pfropfen, auftritt. Besteht nun ein solch starker Druckabfall im Bereich eines der Ventile 210, 220 oder 230 fort, so öffnet dieses Ventil und erhöht den Druck an dieser Stelle. Dieser Vorgang ist beim dargestellten Ausführungsbeispiel im Bereich des Ventils 220 zu erkennen, wobei hier durch das Öffnen des Ventils 220 zusätzliche Luft angesaugt wird und der Druckverlauf der idealen Kennlinie 280 angenähert wird.

Die beiden Förderluftventile 210 und 230 liegen bei der Darstellung nach Figur 6 in einem Bereich höheren Drucks gegenüber der idealen Kennlinie 280, so daß diese Ventile 210 und 230 geschlossen sind.

In Figur 7 ist beispielhaft ein Schnitt durch das Ventil 220 gezeigt, um die prinzipielle Funktionsweise zu erläutern. Hier wird ein Ventilstössel 300 über eine einstellbare Feder 310 an eine Öffnung 320 an der Förderleitung 200 gedrückt. Bei einem Unterschreiten eines voreingestellten Druckwertes, abgeleitet von der idealen Kennlinie 280 (vgl. Figur 6), hebt der Ventilstössel 300 ab und läßt an dieser Stelle weitere Sekundärluft über eine Öffnung 330 als zusätzliche Förderluft in die Förderleitung 200 einströmen. Somit bewirkt die ausgleichende Zugabe von Förderluft an den eventuell aktivierten Ventilen 210, 220, oder 230 eine Linearisierung der Kennlinie 290 und eine Verhinderung von Pfropfen, die zu einer Verstopfung führen können.

## Patentansprüche

1. Verfahren zur Förderung von Schüttgut, bei dem
- das Schüttgut (2) von einem ersten Behälter (1) zu einem zweiten Behälter (7) über eine rohrförmige Förderleitung (3) unter anderem mittels eines pfropfenbildenden Luftstroms transportiert wird, **dadurch gekennzeichnet, daß**
- mittels einer Steuerung des Luftstroms zwischen einer Ansaugvorrichtung (6,25) und dem zweiten Behälter (7) und in der Förderleitung (3) unterschiedliche Betriebszustände hinsichtlich der Förderart des Schüttgutes bewirkt werden.

2. Verfahren nach Anspruch 1, **dadurch gekennzeichnet, daß**
- zur Regelung der Pfropfenbildung im Betriebszustand der Pfropfenförderung der Luftstrom aus einem Primärluftstrom (16), der durch das Schüttgut (2) im ersten Behälter (1) geleitet wird und einem Sekundärluftstrom, der über mindestens eine Bypassluftzuführung (10) von der Außenluft angesaugt wird, besteht.

3. Verfahren nach Anspruch 2, **dadurch gekennzeichnet, daß**
- die mindestens eine Bypassluftzuführung (10) im Bereich des ersten Behälters (1) angeordnet ist und über eine Drossel (15) so dimensioniert wird, daß eine vorgegebene Maximalluftmenge durch sie hindurchtreten kann, wobei sich hinsichtlich der Pfropfenbildung bei konstanter Ansaugleistung folgende Betriebszustände ergeben:
a) bei keinem oder geringem Schüttgut (2) in der Förderleitung (3) wird aufgrund der Begrenzung in der Bypassluftzuführung (10) (Drossel (15)) mit dem dadurch einsetzenden Primärluftstrom (16), Material (2) aus dem ersten Behälter (1) angesaugt und die Pfropfenbildung gefördert,
b) bei einer erhöhten Schüttgutmenge (2), bzw. einer erhöhten Pfropfenzahl und damit entsprechend geringen Luftstrom in der Förderleitung (3) wird ausschließlich Sekundärluft angesaugt und der versiegende Primärluftstrom (16) führt zu einer Verminderung der Schüttgutmenge (2) und damit zu einer Verminderung der Pfropfenzahl.

4. Verfahren nach Anspruch 3, **dadurch gekennzeichnet, daß**
- mittels einer Veränderung der Drosselstellung an der mindestens einen Bypassluftzuführung (10) die maximale Pfropfenzahl und damit der Materialdurchsatz in der Förderleitung (3) eingestellt wird.

5. Verfahren nach Anspruch 4, **dadurch gekennzeichnet, daß**
- in einem weiteren zusätzlichen Betriebszustand durch eine Erhöhung der Ansaugleistung der Ansaugvorrichtung (6,25) eine Flugförderung des Schüttguts (2) ohne Pfropfenbildung erreicht wird.

6. Vorrichtung zur Durchführung des Verfahrens nach einem der vorhergehenden Ansprüche, **dadurch gekennzeichnet, daß**
- der erste Behälter ein Aufgabebehälter (1) ist, der kontinuierlich mit Schüttgut (2) beschickt wird,
- der zweite Behälter ein Empfangsbehälter (28) zur Zwischenlagerung des Schüttguts (2) ist und daß
- die Ansaugvorrichtung aus mindestens einer Vakuumpumpe oder einem Gebläse (6,25) besteht und über eine Förderklappe (36) an den Empfangsbehälter (28) angekoppelt ist.

7. Vorrichtung nach Anspruch 6, **dadurch gekennzeichnet, daß**
- zwischen der Ansaugvorrichtung (6,25) und dem Empfangsbehälter (28) Leerfahrklappen (33) und Ventile (34,35) zur Steuerung des Luftstroms in der Ansaugleitung angeordnet sind und daß
- Regelungsvorrichtungen (30,37) vorhanden sind, die über eine Meßblende (38) den Luftdurchsatz zwischen der Ansaugvorrichtung (6) und den Empfangsbehältern (28) detektieren und mit der über die Leerfahrklappe (33) und die Ventile (34,35) der Luftstrom in der Ansaugleitung veränderbar ist.

8. Vorrichtung nach Anspruch 6 oder 7, **dadurch gekennzeichnet, daß**
- der Aufgabebehälter (1) Detektionsmittel (21,22) zur Erfassung des minimalen und maximalen Materialstands aufweist.

9. Vorrichtung nach einem der Ansprüche 6 bis 8, **dadurch gekennzeichnet, daß**
- der Ansaugvorrichtung (6,25) eine Filteranlage (40) vorgeschaltet ist, mit der eine Ausfilterung von mitgeführten Staubpartikeln durchführbar ist.

10. Vorrichtung zur Pfropfenförderung von Schüttgut mit den Merkmalen des Oberbegriffs des Anspruchs 1, bei dem
- über die Länge der Förderleitung (200) verteilt Mittel zur Beeinflussung der Druckverhältnisse in Abschnitten der Förderleitung (200) vorhanden sind, **dadurch gekennzeichnet, daß**
- die Mittel zur Beeinflussung der Druckverhältnisse aus Ventilen (210,220,230) bestehen, die in vorgegebenen Abständen an die Förderleitung (200) angeschlossen sind und jeweils separat auf einen vorgegebenen Öffnungsdruck im jeweiligen Abschnitt der Förderleitung (200) eingestellt sind, bei dem sie gegenüber der Außenluft öffnen.

11. Vorrichtung nach Anspruch 10, **dadurch gekennzeichnet, daß**
- die Ventile (210,220,230) jeweils separat auf einen derartigen Öffnungsdruck eingestellt sind, daß sich während der Pfropfenförderung über der Länge der Förderleitung (200) ein nahezu linearer Druckverlauf ergibt.

12. Vorrichtung nach Anspruch 11, **dadurch gekennzeichnet, daß**
- die Ventile (210,220,230) jeweils an eine entsprechende Öffnung an der Förderleitung (200) angeschlossen sind, daß
- die jeweilige Öffnung über einen federdruckbeaufschlagten Ventilstössel (300) verschließbar ist, daß
- über eine Öffnung im Ventil (210,220,230) Außenluft (330) in das Ventilinnere und gegebenenfalls in die Förderleitung (200) einströmen kann und daß
- der Öffnungsdruck, bei dem der Ventilstössel (300) von der Öffnung an der Förderleitung (200) abhebt, über eine Feder (310) einstellbar ist.
